# EUROPÄISCHE PATENTSCHRIFT

(11) **EP 1 729 254 B1**
(45) Veröffentlichungstag und Bekanntmachung des Hinweises auf die Patenterteilung: **27.09.2017**
(21) Anmeldenummer: 06112270.1
(22) Anmeldetag: 05.04.2006
(51) Int. Cl.: G06Q 20/00, H04L 12/24, H04L 12/26

(54) **Verfahren und System zur Datenübertragung**
Data transfer method and system
Procédé et système de transmission de données

(30) Priorität: 06.05.2005 DE 102005021129
(43) Veröffentlichungstag der Anmeldung: 06.12.2006
(73) Patentinhaber: ROBERT BOSCH GMBH, 70442 Stuttgart (DE)
(72) Erfinder: Poechmueller, Werner, 31139 Hildesheim (DE); Pickhard, Friedhelm, 31079 Sibbesse (DE)

(56) Entgegenhaltungen:
- EP-A- 1 255 380
- WO-A-02/25821
- WO-A-03/036576
- US-A1- 2003 135 463
- US-A1- 2003 169 881

## Beschreibung

### Stand der Technik

Die Erfindung geht von einem Verfahren und einem System nach der Gattung der unabhängigen Patentansprüche aus.

In der Wirtschaft spielt der Austausch von Daten eine zunehmende Rolle. Beispiele hierfür sind Banktransaktionen, Börsentransaktionen und ähnliche Vorgänge. Dabei spielt die Nachweispflicht eine zunehmende Rolle. Es sind Fragen zu klären wie "Wo und wann wurde eine Transaktion beauftragt?", "Wo und wann wurde der Auftrag empfangen und ausgeführt?". Um diese Fragen im Falle der Nachweispflicht zu klären, sind die während der Transaktion zu übertragenden Daten mit Zusatzinformation zu versehen. Derzeit erfolgt dies durch Unterschriften, manuellen Eintrag von Orten und Personen oder z.B. das Vorsehen von Uhren in Rechnern oder fest in stationären Rechnern eingetragene Zusatzinformationen. Dies wird insbesondere problematisch, wenn die Recheneinheiten, welche Transaktionsdaten übertragen, nicht stationär sind und sich örtlich bewegen können oder über reduzierte Eingabemöglichkeiten für Zusatzinformation verfügen.

Es sind Fahrzeugnavigationssysteme bekannt, die einen jeweils aktuellen Fahrzeugstandort auf Grundlage von empfangenen Signalen von GPS- (=Global Positioning System)-Navigationssatelliten bestimmen. In den Signalen der GPS-Satelliten sind auch Informationen über eine aktuelle Uhrzeit enthalten.

Aus der WO 02/25821 A2 ist ein Verfahren zur Messung von Übertragungseigenschaften in einem Telekommunikationsnetzwerk bekannt. Das Telekommunikationsnetzwerk umfasst dabei mehrere Vermittlungseinrichtungen und weitere Einrichtung, die über Verbindungsleitungen miteinander verbunden sind. In dem Telekommunikationsnetzwerk sind zwei Messrechner angeordnet, zwischen denen Testpakete von einem ersten Messrechner über eine Messstrecke zu einem zweiten Messrechner übertragen werden. Die Messwerte umfassen jeweils GPS-Karten, die Zeitmarken für den Ein- und Ausgang der Testpakete bereitstellen. Eine Laufzeit zwischen den zwei Messrechnern wird dadurch ermittelt, dass der erste Messrechner den zeitlichen Ausgang des Testpaketes erfasst und mit dem Testpaket zum zweiten Messrechner überträgt. Der zweite Messrechner erfasst den Eingang des Testpaketes und bildet die Differenz in der Laufzeit des Testpaketes vom ersten zum zweiten Messrechner. Das Messergebnis stellt der zweite Messrechner einem Steuerrechner zur Verfügung.

Aus der US 2003/135463 A1 ist ein System und ein Verfahren bekannt, um einen Betrug mit Kreditkartentransaktionen zu vermeiden. Dabei ist ein Verkaufsterminal mit einem Zentralcomputer über ein Kommunikationsnetzwerk verbunden. Der Zentralcomputer umfasst eine Datenbank mit Identifikationsmerkmalen für ein Konto des Benutzers. Die Kommunikationseinrichtung umfasst eine GPS-Einheit, die ihre Position an den Zentralcomputer überträgt. Der Verkaufsort wird dadurch bestätigt, dass eine Verkaufs-ID bei der Transaktionsinformation mit an den Zentralrechner übertragen wird.

Die WO 03/036576 A2 zeigt ein Verfahren zur zusätzlichen Absicherung von Zahlungen mittels Bezahlkarten. Dabei wird eine Distanz zwischen einem Bezahlterminal, an dem die Bezahlung vorgenommen wird und dem Bezahlterminal, an dem eine vorige Zahlung vorgenommen wurde, auf Grundlage von Daten, die in einer Datenbank abgelegt sind, ermittelt. Die ermittelte Distanz wird mit einem Schwellenwert verglichen. Bei der Überschreitung des Schwellenwertes wird die Transaktion abgebrochen.

Weiter ist ein sogenanntes FCD- (= floating car data)- System bekannt geworden, bei dem Standorte von Fahrzeugen einer Fahrzeugflotte zusammen mit zusätzlichen Parametern, wie zum Beispiel Fahrzeuggeschwindigkeit, ermittelt und über eine Funkverbindung an eine Zentrale übermittelt werden, in welcher die empfangenen Fahrzeugdaten zur Ableitung von Informationen beispielsweise über Verkehrsbehindungen auf bestimmten Abschnitten des Straßennetzes ausgewertet werden.

### Vorteile der Erfindung

Die Erfindung mit den Merkmalen der unabhängigen Patentansprüche ermöglicht in vorteilhafter Weise die Verifizierung von Datenübertragungen von einer Datenquelle zu einer Datensenke auf Grundlage von Zusatzinformationen, die sender- wie empfängerseitig aus Informationen einer Ortungseinheit abgeleitet werden.

Dazu sind ein Verfahren und ein System zur Übertragung von Nutzdaten von einer Datenquelle zu einer Datensenke vorgesehen, wobei die Datenquelle mit einer Ortungseinheit verbunden ist, wobei den Nutzdaten in der Datenquelle aus Informationen der mit der Datenquelle verbundenen Ortungseinheit abgeleitete Zusatzdaten zugeordnet werden, welche zusammen mit den Nutzdaten an die Datensenke übertragen werden, bei welchem in der Datensenke den empfangenen Nutzdaten weitere Zusatzdaten zugeordnet werden, welche aus weiteren Informationen einer mit der Datensenke verbundenen Ortungseinheit abgeleitet werden.

Werden die quellseitig zugeordneten Zusatzdaten und die senkenseitig zugeordneten weiteren Zusatzdaten zueinander in Relation gesetzt, kann daraus eine Information über die Datenübertragung gewonnen werden.

Ortungssysteme, insbesondere das entstehende europäische GALILEO-Satellitenortungssystem, liefern Zeit- und Ortsinformation in so hoher Güte, dass Transaktionsdaten auf ihrem Weg vom Sender zum Empfänger automatisch mit Zusatzinformationen aus einem Ortungsmodul versehen werden können, so dass nachträglich eine sichere Rekonstruktion des Weges erfolgen kann, den die Transaktionsdaten genommen haben. Es ist auch eine sichere Rekonstruktion der Zeit möglich, zu der sich ein Transaktionsdatum an einem Ort befunden hat. Weiterhin ist die Rekonstruktion in einem mobilen Netzwerk möglich, da das Ortungsmodul jederzeit die absolute Uhrzeit sowie den absoluten Ort einer Einheit feststellen kann, die Transaktionsdaten sendet, empfängt oder weiterleitet und somit Sendezeit, Sendeort, Empfangszeit, Empfangsort, Weiterleitungszeit, Weiterleitungsort bestimmen kann. Das gilt insbesondere in einem mobilen Transaktionsnetzwerk, in dem Transaktionsdaten zwischen mobilen Recheneinheiten, welche mit Ortungsmodulen ausgestattet sind, versendet werden.

Vorteilhafte Ausgestaltungen und Weiterbildungen der Erfindung sowie die damit verbundenen spezifischen Vorzüge ergeben sich aus den abhängigen Patentansprüchen und sind im Zusammenhang mit den Ausführungsbeispielen nachfolgend näher erläutert.

Es ist von Vorteil, wenn eine zusätzliche Einrichtung vorgesehen ist, in der die quellseitig zugeordneten Zusatzdaten und die senkenseitig zugeordneten weiteren Zusatzdaten automatisch zueinander in Relation gesetzt werden.

Daneben ist es aber auch möglich, die quell- und die senkenseitig zugeordneten Zusatz- bzw. weiteren Zusatzdaten händisch abzugleichen bzw. zueinander in Relation zu setzen.

Es ist von Vorteil, wenn die Zusatzinformation eine Zeitinformation der beiden Ortungsmodule der Datenquelle und der Datensenke umfasst. Weiterhin ist es von Vorteil wenn die Zusatzinformation alternativ oder ergänzend zur Zeitinformation eine Ortsinformation der beiden Ortungsmodule der Datenquelle und der Datensenke umfasst.

Es ist von Vorteil, wenn die Relation in einem Zeitvergleich der beiden Zusatzinformationen besteht und damit die Laufzeit der Nutzinformation von der Datenquelle zur Datensenke bestimmt wird. Weiterhin ist es von Vorteil, wenn die Relation alternativ oder ergänzend in einem Ortsvergleich der beiden Zusatzinformationen besteht und damit die Entfernung oder der Laufweg zwischen Datenquelle und Datensenke bestimmt wird.

Es ist von Vorteil, wenn die Nutzinformation auf ihrem Weg von der Datenquelle über mindestens eine weiterreichende Recheneinheit zur Datensenke auf jeder weiterreichenden Recheneinheit mit einer Zusatzinformation verknüpft wird, die in dem der jeweiligen weiterreichenden Recheneinheit zugeordneten Ortungsmodul erzeugt wird und mit der Relation der örtliche Weg der Nutzinformation rekonstruiert wird. Ebenso ist es von Vorteil, wenn die Nutzinformation auf einem Weg von der Datenquelle über mindestens eine weiterreichende Recheneinheit zur Datensenke in jeder weiterreichenden Recheneinheit mit einer Zusatzinformation verknüpft, die durch die der Recheneinheit zugeordnete Ortungseinrichtung ermittelt wird, und mit der Relation die zeitliche Verarbeitungsfolge der Nutzinformation rekonstruiert wird.

Es ist von Vorteil, wenn die Nutzinformation oder ein Teil der Nutzinformation mittels eines durch die Datenquelle auswertbaren wechselbaren Speichers, beispielsweise eine Chipkarte, in die Datenquelle eingebracht werden. Hier ist es weiterhin von Vorteil, wenn der wechselbare Speicher dazu vorgesehen ist, die von der Datenquelle zusammen mit den Nutzdaten gesendeten Zusatzdaten zu speichern.

Eine vorteilhafte Ausführungsform richtet sich darauf, dass der wechselbare Speicher in Form oder als Bestandteil eines Rechners, beispielsweise eines Personal Computers, eines Mobiltelefons oder eines PDA bzw. Handheld-Computers, ausgebildet ist.

Die Datenquelle und/oder die Datensenke können vorteilhaft ein Mobiltelefon, ein Personal Computer, ein Laptop-Rechner, ein PDA-Rechner, ein Fahrerinformationssystem eines Kraftfahrzeugs, einen Geldautomaten oder dergleichen sein.

Die Ortungseinheit oder im Falle mehrerer Ortungseinheiten mindestens eine der Ortungseinheiten können vorteilhaft durch einen Satellitenempfänger, insbesondere ein GPS- oder GALILEO-Empfänger, ein Mobilfunkempfänger, insbesondere ein GSM,-GPRS- oder UMTS-Mobilfunkempfänger gebildet sein und/oder eine Inertialsensorik und/oder eine digitale Karte und/oder eine Map Matching-Routine umfassen.

Zum Schutz vor unbefugter Manipulation der Nutz- oder der Zusatzdaten können diese vorteilhaft unter Verwendung einer Verschlüsselungstechnik, die beispielsweise unter dem Stichwort "Digital Watermarking" bekannt ist, miteinander verknüpft werden.

### Zeichnungen

Ausführungsbeispiele der Erfindung sind in den Figuren dargestellt und werden nachfolgend näher erläutert.

### Es zeigen

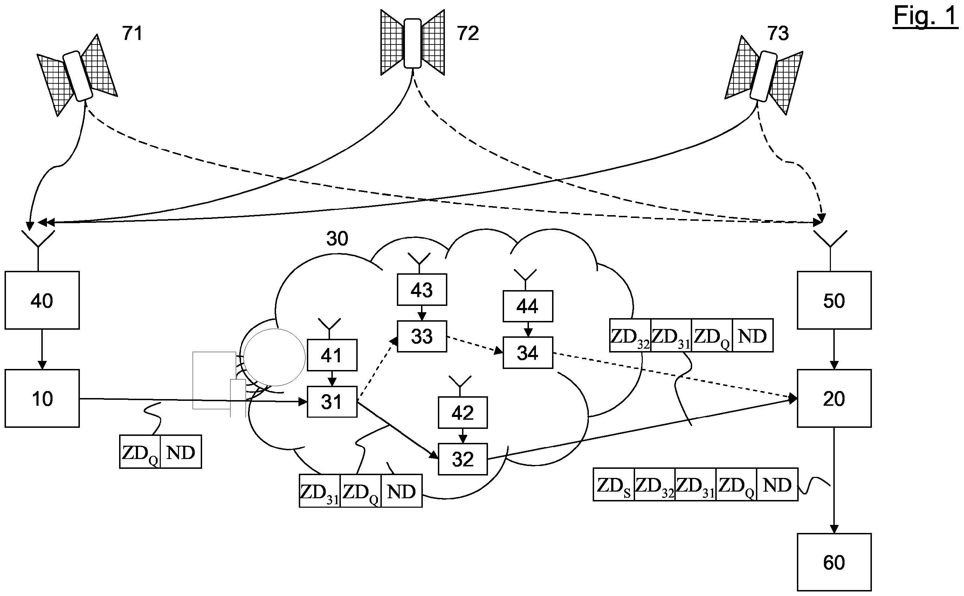

Figur 1 ein erfindungsgemäßes System zur Durchführung des erfindungsgemäßen Verfahrens.

### Beschreibung der Ausführungsbeispiele

Figur 1 zeigt ein erfindungsgemäßes System zur Durchführung des erfindungsgemäßen Verfahrens.

Das erfindungsgemäße System umfasst eine Datenquelle 10 und eine Datensenke 20, die über ein Kommunikationsnetzwerk 30 miteinander verbunden sind. Die Datenquelle 10 sendet Daten, insbesondere Nutzdaten ND, über das Kommunkationsnetzwert 30 an die Datensenke 20.

Die Datenquelle 10 ist mit einer Ortungseinheit 40 verbunden, die ihre eigene Position und/oder eine aktuelle Uhrzeit ermittelt und diese Informationen der Datenquelle 10 zur Verfügung stellt. Die Ortungseinheit 40 ist im vorliegenden Fall als Empfänger für Satellitensignale eines Satelliten-Ortungssystems ausgebildet. Ein solches Satellitenortungssystem, beispielsweise das etablierte GPS- (Global Positioning System) - System oder alternativ das in Europa in Entwicklung befindlich Galileo-System umfasst eine Mehrzahl von Satelliten 71, 72, 73, die zur Positionsbestimmung geeignete Signale senden, in denen daneben auch Zeitinformationen, insbesondere eine Normalzeit, enthalten sind. Die Ortungseinheit ermittelt aus den von diesen Satelliten 71, 72, 73 empfangenen Signalen ihren jeweiligen aktuellen Standort und die aktuelle Uhrzeit.

Alternative Ausführungsformen der Ortungseinrichtung 40 sind möglich und liegen im Bereich der Erfindung. Beispielsweise kann die Ortungseinheit auch zur Bestimmung von Positions- und Zeitinformationen aus Signalen eines Mobilfunknetzes nach dem GSM-, GPRS-, UMTS- oder einem vergleichbaren Standard ausgebildet sein. Diese Netze verfügen über eine Vielzahl von Funksende- und Empfangsstationen, wobei ein entsprechendes Funkgerät regelmäßig Signale mit einer aus dieser Vielzahl von Funkstationen austauscht. Somit ist zumindest eine Groblokalisation durch die Zuordnung des Funkgeräts zu einer Funkstation möglich.

Die Ortungseinheit kann beispielsweise auch eine Inertialsensorik umfassen, wie dies beispielsweise von Fahrzeugnavigationgeräten bekannt ist. Beispielsweise kann ein Kreiselkompass, auch Gyroskop, vorgesehen sein, der Richtungsänderungen erfasst, ferner können Beschleunigungssensoren zumindest zur Erfassung translatorischer Bewegungsrichtungsänderungen vorgesehen sein. Diese Inertialsensorik ermöglicht ausgehend von einer bekannten Position die Ermittlung nachfolgender Positionen durch Auswertung der Signale der Inertialsensorik.

Weiter kann die Ortungseinheit 40 eine digitale Karte umfassen und ferner eine aus der Fahrzeugnavigation bekannte Map Matching-Routine, die Positions- und/oder Richtungsdaten mit den in der digitalen Karte im Sinne einer Plausibilitätsprüfung abgleicht und daraus eine resultierend Position ermittelt bzw. Positionsdaten entsprechend des Abgleichs korrigiert.

Sobald die Datenquelle 10 mit dem Versenden von Nutzdaten ND an die Datensenke 20 beginnt, werden die Nutzdaten ND mit Zusatzinformationen ZD_{Q} der verbundenen Ortungseinheit 40 verknüpft, beispielsweise mit der aktuellen Uhrzeit oder alternativ oder ergänzend dazu mit der aktuellen Position der Ortungseinheit 40. Diese Verküpfung aus Nutz- und Zusatzdaten ND und ZD_{Q} wird über das Kommunikationsnetzwerk 30 an die Datensenke 20 übertragen.

Die Datensenke 20 ist mit einer weiteren Ortungseinheit 50 verbunden, die analog der Ortungseinheit 40 ihre eigene Position und/oder eine aktuelle Uhrzeit ermittelt und diese Informationen der Datensenke 20 zur Verfügung stellt.

Die Datensenke 20 empfängt die von der Datenquelle 10 über das Kommunikationsnetzwerk 30 gesendeten Nutz- und Zusatzdaten ND und ZD_{Q}. Sobald die von der Datenquelle 10 gesendeten Daten, also Nutz- und Zusatzdaten, bei der Datensenke 20 eingehen, ordnet diese diesen Daten weitere Zusatzdaten ZD_{S} zu, die aus weiteren Zusatzinformationen der weiteren Ortungseinheit 50 abgeleitet sind. Bei den seitens der Datensenke zugeordneten Zusatzdaten ZD_{S} handelt es sich um den senderseitig zugeordneten Zusatzdaten entsprechende Zusatzdaten.

Das System umfasst weiterhin eine Überprüfungseinrichtung 60, der die Nutzdaten ND, die Zusatzdaten ZD_{Q} und die weiteren Zusatzdaten ZD_{S} von der Datensenke 20 zugeführt sind. Die Überprüfungseinrichtung 60 ist dazu ausgebildet, die Zusatzdaten ZD_{Q} der Datenquelle 10 und die weiteren Zusatzdaten ZD_{S} der Datensenke 20 zueinander in Relation zu setzen und so Rückschlüsse über den Übertragungsvorgang zu ermöglichen.

Mit zueinander in Relation setzen ist damit insbesondere, aber nicht ausschließlich, eine Bestimmung der Laufzeit der Nutzdaten von der Datenquelle 10 zur Datensenke 20, gegebenenfalls über weiterreichende Recheneinheiten 31, 32, 33, 34 aus den Zusatzdaten ZD_{Q} und ZD_{S} sowie gegebenenfalls zusätzlich ZD₃₁ und ZD₃₂ und/oder ein Vergleich der Orte der an der Transaktion beteiligten Datenquelle 10 und -senke 20 sowie der gegebenenfalls zwischengeschalteten, die Nutzdaten weiterreichenden Recheneinheiten 31, ..., 34 gemeint.

Das vorstehend beschriebene Datenübertragungssystem und -verfahren können vorteilhaft beispielsweise im bargeldlosen Zahlungsverkehr oder anderen Datentransaktionen über Internet, Telefon oder andere Übertragungskanäle genutzt werden.

Eine sendende Recheneinheit 10 möchte Ihre Nutzdaten an eine empfangende Recheneinheit 20 übertragen. Im Moment des Startens der Transaktion verknüpft die sendende Recheneinheit 10 ihre Nutzinformation mit der Zusatzinformation ihres lokalen Ortungsmoduls 40. Diese Information könnte z.B. eine Uhrzeit sein. Da Satelliten-Ortungsmodule die absolute Uhrzeit im Millisekunden-Bereich feststellen können, lässt sich so z.B. die genaue Uhrzeit des Beginns der Transaktion feststellen und mit den Nutzdaten verknüpfen. Eine andere sinnvolle Ausgestaltung wäre die Verknüpfung mit einer Ortsinformation, da mit Satelliten-Ortungsmodulen die absolute Ortsposition im Meterbereich bestimmt werden kann.

Sobald die von der sendenden Recheneinheit 10 gestarteten Transaktionsdaten in der empfangenden Recheneinheit 20 ankommen, kann diese empfangende Recheneinheit 20 wiederum mit ihrem eigenen lokalen Ortungsmodul 50 die gleichartige Zusatzinformation wie beim Ortungsmodul 40 der sendenden Einheit 10 erzeugen. In dem genannten Beispiel sind dies eine Uhrzeit oder Ortszeit des Empfangs.

Das Transaktionssystem umfasst eine Einrichtung 60, um die Zusatzinformation der sendenden Recheneinheit 10 in Relation zur Zusatzinformation der empfangenden Recheneinheit 20 zu setzen. So kann z.B. die Laufzeit der Transaktion mit einer Genauigkeit im Millisekundenbereich bestimmt werden. Dabei kann das Verfahren entweder auf der empfangenden Recheneinheit 20 umgesetzt werden oder ausserhalb der empfangenden Recheneinheit 20 in einer separaten Überprüfungseinrichtung 60. Im letzten Fall muss die Zusatzinformation des weiteren Ortungsmoduls 50 der empfangenden Recheneinheit 20 zusammen mit den Nutzdaten verknüpft bzw. gespeichert werden.

Das beschriebene System von Recheneinheiten kann dabei aus physikalisch getrennten Recheneinheiten in einem Computer-Netzwerk bestehen, die über bekannte Vernetzungstechniken wie z.B. Ethernet, DSL, WLAN, GSM/GPRS/UMTS, USB, Bluetooth, optische Netzwerke oder ähnliches miteinander verbunden sind. Es kann sich aber auch um virtuelle Recheneinheiten innerhalb eines Computers handeln, die auf ein gemeinsames Ortungsmodul 40 zugreifen. So könnten z.B. auf einem Computer verschiedene Programme, welche Transaktionen untereinander auslösen, Daten miteinander austauschen, bei denen eine nachträgliche Nachweispflicht entsteht, ob und wann die Daten zwischen den einzelnen Verarbeitungsschritten (=Programmen oder "virtuellen Recheneinheiten") ausgetauscht bzw. bearbeitet wurden.

Eine weitere sinnvolle Ausgestaltung des Systems besteht darin, die Nutzinformation beim Routen über mehrere Recheneinheiten 31, 32, 33, 34 in einem grösseren Netzwerk 30 von einer sendenden Recheneinheit 10 über mehrere weiterreichende Recheneinheiten zu einer empfangenden Recheneinheit 20 mit jeweils den Zusatzinformationen ZD31, ZD 32 von dem Ortungsmodul 40 äquivalenten Ortungsmodulen 41,42,43,44 jeder weiterreichenden Recheneinheit 31, 32, 33, 34 zu verknüpfen. Damit kann nachträglich über eine Relationsbildung der örtliche sowie auch zeitliche Weg der Nutzdaten ND der Transaktion über die Recheneinheiten des Netzwerkes 30 bestimmt werden.

Auch hierbei können in einer weiteren sinnvollen Ausgestaltung wiederum die weiterreichenden Recheneinheiten 31, 32, 33, 34 virtuelle Recheneinheiten in Form von Datenverarbeitungsprogrammen auf einem physikalischen Computer mit einem physikalischen Ortungsmodul darstellen. Durch die Verknüpfung der in den Programmen zu bearbeitenden Nutzinformation mit den an den Transaktionen beteiligten virtuellen Recheneinheiten kann nachträglich z.B. die Bearbeitungszeit der resultierenden Nutzdaten rekonstruiert werden. Weiterhin ist rekonstruierbar, ob die die Nutzdaten bearbeitende Recheneinheit von ihrem Ort bewegt wurde (um z.B. kriminelle Manipulationen an einem anderen Ort durchzuführen; bei einer stationären Recheneinheit müssen die Zusatzdaten zu jedem Transaktionsschritt denselben Ort anzeigen).

Eine weitere sinnvolle Ausgestaltung des Systems besteht darin, einen wechselbaren, mobilen Datenträger, beispielsweise eine Chipkarte zum Auslösen der Transaktion im sendenden Rechner 10 des Transaktionssystems vorzusehen. Dabei befinden sich die zu übertragenden Nutzdaten ND oder ein Teil der zu übertragenden Nutzdaten ursprünglich auf der Chipkarte. Ein Anwendungsfall hierfür ist das Bezahlen über eine Chipkarte. Dabei wird eine Chipkarte in die transaktionsauslösende Recheneinheit 10 eingeführt. Die Nutzdaten der Chipkarte, z.B. eine Besitzeridentifikation, werden auf die transaktionsauslösende Recheneinheit 10 übertragen, dort mit weiteren Nutzdaten versehen, z.B. eingetippte PIN-Nummer und zu transferierender Geldbetrag, und mit der Zusatzinformation, wie z.B. Ort und Uhrzeit, des Ortungsmoduls 40 der transaktionsauslösenden Recheneinheit 10 versehen.

Eine weitere sinnvolle Ausgestaltung des Systems besteht darin, in Verbindung mit einem wechselbaren, mobilen Datenträger, beispielsweise einer Chipkarte, die Zusatzinformation oder Teile der Zusatzinformation des Ortungsmoduls 40 der transaktionsauslösenden Recheneinheit 10 auf dem Datenträger zu speichern. Ein Anwendungsfall hierfür könnte folgendermaßen aussehen. Es erfolgt eine Transaktion, z.B. Geldbetrag auszahlen oder überweisen wie vorangehend beschrieben, mit Hilfe der Chipkarte. Die transaktionsauslösende Recheneinheit 10 speichert dabei die mit ihrem Ortungs-Empfänger 40 erzeugte Zusatzinformation ZD_{Q} zusätzlich auf der Chipkarte ab. Diese Zusatzinformationen umfasst beispielsweise Uhrzeit und Ort bei Auslösen der Transaktion. Dadurch kann auch mit Hilfe der Chipkarte nachträglich festgestellt werden, wann und wo mit dieser Chipkarte Transaktionen angestossen wurden, ohne dass die Chipkarte selbst über ein Ortungsmodul verfügen muss.

In einer weiteren sinnvollen Ausgestaltung des Systems wird der wechselbare Speicher durch einen Personal Computer, einen PDA (Personal Digital Assistant = Handheld Computer), ein Mobiltelefon oder ein Kfz-Fahrerinformationssystem ohne Ortungsmodul mit Verbindung zu einer transaktionsauslösenden Recheneinheit 10 ersetzt. Dabei ersetzt quasi der Personal Computer, der PDA, das Mobiltelefon oder das Kfz-Fahrerinformationssystem die Chipkarte, besitzt aber eine Verbindung zur transaktionsauslösenden Recheneinheit 10 mit Ortungsmodul 40, stößt dort die Transaktion an, empfängt und speichert die von der transaktionsauslösenden Recheneinheit 10 mit Ortungsmodul 40 empfangene Zusatzinformation ZD_{Q} oder Teile dieser Zusatzinformation, z.B. Ort und Uhrzeit der transaktionsauslösenden Recheneinheit mit Ortungsmodul. Somit kann auch aus der gespeicherten Zusatzinformation der weiteren Recheneinheit (PC, PDA, Mobiltelefon, Kfz-Fahrerinformationssystem) ohne Ortungsmodul nachträglich zumindest festgestellt werden, zu welcher Uhrzeit und von welcher transaktionsauslösenden Recheneinheit 10 mit Ortungsmodul Transaktionen beauftragt wurden.

Eine weitere sinnvolle Ausgestaltung besteht darin, die Zusatzinformation aus den Ortungsmodulen 40, 50 unter Anwendung von Verfahren, wie sie z.B. beim "Digital Watermarking" bekannt sind, derart mit den Nutzdaten ND der Transaktion zu verbinden, dass sie für außenstehende Personen nicht trennbar sind. Damit lassen sich Manipulationen durch kriminelle Eingriffe in das Netzwerk der Recheneinheiten 10, 20 vermeiden oder zumindest erschweren.

Eine weitere sinnvolle Ausgestaltung besteht darin, dass die Zusatzinformation ZD_{Q}, ZD_{S} sogenannte "Quality of Service-Information" aus dem Ortungsmodul 40, 50 trägt. Diese Quality-of-Service-Information könnte z.B. eine Zuverlässigkeit des Empfangs ausdrücken oder eine Genauigkeit oder Sicherheit oder rechtliche Verbindlichkeit der gelieferten Zusatzinformation (z.B. Zeitinformation oder Ortsinformation).

## Patentansprüche

1. Verfahren zur Übertragung von Nutzdaten (ND) von einer Datenquelle (10) zu einer Datensenke (20),
wobei die Datenquelle (10) mit einer Ortungseinheit (40) verbunden ist, wobei den Nutzdaten (ND) in der Datenquelle (10) aus Informationen der mit der Datenquelle (10) verbundenen Ortungseinheit (40) abgeleitete Zusatzdaten (ZD_{Q}) zugeordnet werden, welche zusammen mit den Nutzdaten (ND) an die Datensenke (20) übertragen werden,
**dadurch gekennzeichnet,**
**dass** in der Datensenke (20) den empfangenen Nutzdaten (ND) weitere Zusatzdaten (ZD_{S}) zugeordnet werden, welche aus weiteren Informationen einer mit der Datensenke (20) verbundenen Ortungseinheit (50) abgeleitet werden, wobei die empfangenen Nutzdaten (ND) zusammen mit den Zusatzdaten (ZD_{Q}) und den weiteren Zusatzdaten (ZD_{S}) einer Überprüfungseinrichtung (60) zugeführt werden.

2. Verfahren nach Anspruch 1, **dadurch gekennzeichnet, dass** die quellseitig zugeordneten Zusatzdaten (ZD_{Q}) und die senkenseitig zugeordneten weiteren Zusatzdaten (ZD_{S}) zueinander in Relation gesetzt werden.

3. System zur Übertragung von Nutzdaten (ND) von einer Datenquelle (10) zu einer Datensenke (20),
wobei die Datenquelle (10) mit einer Ortungseinheit (40) verbunden ist, wobei die Datenquelle (10) ausgebildet ist, den Nutzdaten (ND) aus Informationen der mit der Datenquelle (10) verbundenen Ortungseinheit (40) abgeleitete Zusatzdaten (ZD_{Q}) zuzuordnen und diese zusammen mit den Nutzdaten (ND) an die Datensenke (20) zu übertragen,
**dadurch gekennzeichnet,**
**dass** die Datensenke (20) mit einer Ortungseinheit (50) und einer Überprüfungseinrichtung (60) verbunden ist und
**dass** die Datensenke (20) dazu ausgebildet ist, den empfangenen Nutzdaten (ND) weitere Zusatzdaten (ZD_{S}) zuzuordnen, welche aus weiteren Informationen der mit der Datensenke (20) verbundenen Ortungseinheit (50) abgeleitet werden und die empfangenen Nutzdaten (ND) zusammen mit den Zusatzdaten (ZD_{Q}) und weiteren Zusatzdaten (ZD_{S}) an die Überprüfungseinrichtung (60) zuzuführen.

4. System nach Anspruch 3, **gekennzeichnet, durch** eine Einrichtung (60), die dazu vorgesehen ist, die quellseitig zugeordneten Zusatzdaten (ZD_{Q}) und die senkenseitig zugeordneten weiteren Zusatzdaten (ZD_{S}) zueinander in Relation zu setzen.

5. Verfahren oder System nach Anspruch einem der vorhergehenden Ansprüche, **dadurch gekennzeichnet, dass** die Zusatzinformation (ZD_{Q}, ZD_{S}) eine Zeitinformation der beiden Ortungsmodule (40, 50) der Datenquelle (10) und der Datensenke (20) umfasst.

6. Verfahren oder System nach einem der vorhergehenden Ansprüche, **dadurch gekennzeichnet, dass** die Zusatzinformation (ZD_{Q}, ZD_{S}) eine Ortsinformation der beiden Ortungsmodule (40, 50) der Datenquelle (10) und der Datensenke (20) umfasst.

7. Verfahren oder System nach Anspruch 5, **dadurch gekennzeichnet, dass** die Relation in einem Zeitvergleich der beiden Zusatzinformationen besteht und damit die Laufzeit der Nutzinformation (ND) von der Datenquelle (10) zur Datensenke (20) bestimmt wird.

8. Verfahren oder System nach Anspruch 6 oder 7, **dadurch gekennzeichnet, dass** die Relation in einem Ortsvergleich der beiden Zusatzinformationen besteht und damit die Entfernung oder der Laufweg zwischen Datenquelle (10) und Datensenke (20) bestimmt wird.

9. Verfahren oder System nach einem der Ansprüche 2 oder 4 bis 8, **dadurch gekennzeichnet, dass** die Nutzinformation (ND) auf einem Weg von der Datenquelle (10) über mindestens eine weiterreichende Recheneinheit (31, 32, 33, 34) zur Datensenke (20) in jeder weiterreichenden Recheneinheit (31, 32, 33, 34) mit in einer der jeweiligen weiterreichenden Recheneinheit (31, 32, 33, 34) zugeordneten Ortungseinheit (41, 42, 43, 44) erzeugten Zusatzinformation (ZD_{31,} ZD₃₂) verknüpft und mit der Relation der örtliche Weg der Nutzinformation (ND) rekonstruiert wird.

10. Verfahren oder System nach einem der Ansprüche 2 oder 4 bis 9, **dadurch gekennzeichnet, dass** die Nutzinformation (ND) auf einem Weg von der Datenquelle (10) über mindestens eine weiterreichende Recheneinheit (31, 32, 33, 34) zur Datensenke (20) in jeder weiterreichenden Recheneinheit (31, 32, 33, 34) mit in einer der jeweiligen weiterreichenden Recheneinheit durch ein Ortungsmodul erzeugten Zusatzinformation verknüpft und mit der Relation die zeitliche Verarbeitungsfolge der Nutzinformation (ND) rekonstruiert wird.

11. Verfahren oder System nach einem der vorhergehenden Ansprüche, **dadurch gekennzeichnet, dass** die Nutzinformation oder ein Teil der Nutzinformation mittels eines durch die Datenquelle (10) auswertbaren wechselbaren Speichers, insbesondere Chipkarte, in die Datenquelle (10) eingebracht werden.

12. Verfahren oder System nach Anspruch 11, **dadurch gekennzeichnet, dass** der wechselbare Speicher dazu vorgesehen ist, die von der Datenquelle (10) zusammen mit den Nutzdaten (ND) gesendeten Zusatzdaten (ZD_{Q}) zu speichern.

13. Verfahren oder System nach Anspruch 11 oder 12, **dadurch gekennzeichnet, dass** der wechselbare Speicher in Form oder als Bestandteil eines Rechners, insbesondere eines Personal Computers, eines Mobiltelefons oder eines PDA bzw. Handheld-Computers ausgebildet ist.

14. Verfahren oder System nach einem der vorhergehenden Ansprüche, **dadurch gekennzeichnet, dass** die Datenquelle (10) und/oder die Datensenke (20) ein Mobiltelefon, ein Personal Computer, ein Laptop-Rechner, ein PDA-Rechner, ein Fahrerinformationssystem eines Kraftfahrzeugs, einen Geldautomaten oder dergleichen ist.

15. Verfahren oder System nach einem der vorhergehenden Ansprüche, **dadurch gekennzeichnet, dass** die oder eine der Ortungseinheiten (40) ein Satellitenempfänger, insbesondere ein GPS- oder GALILEO-Empfänger, ein Mobilfunkempfänger, insbesondere ein GSM,- GPRS- oder UMTS-Mobilfunkempfänger ist und/oder eine Inertialsensorik und/oder eine digitale Karte und/oder eine Map Matching-Routine umfasst.

16. Verfahren oder System nach einem der vorhergehenden Ansprüche, **dadurch gekennzeichnet, dass** Nutzdaten und Zusatzdaten unter Verwendung einer Verschlüsselungstechnik miteinander verknüpft werden.

## Claims

1. Method for transmitting useful data (ND) from a data source (10) to a data sink (20),
wherein the data source (10) is connected to a locating unit (40), wherein the useful data (ND) in the data source (10) are assigned supplementary data (ZD_{Q}) derived from information from the locating unit (40) connected to the data source (10), which supplementary data are transmitted to the data sink (20) together with the useful data (ND),
**characterized**
**in that** in the data sink (20) the received useful data (ND) are assigned further supplementary data (ZD_{S}) that are derived from further information from a locating unit (50) connected to the data sink (20), wherein the received useful data (ND) are supplied to a checking device (60) together with the supplementary data (ZD_{Q}) and the further supplementary data (ZD_{S}).

2. Method according to Claim 1, **characterized in that** the supplementary data (ZD_{Q}) assigned at the source end and the further supplementary data (ZD_{S}) assigned at the sink end are related to one another.

3. System for transmitting useful data (ND) from a data source (10) to a data sink (20),
wherein the data source (10) is connected to a locating unit (40), wherein the data source (10) is designed to assign the useful data (ND) supplementary data (ZD_{Q}) derived from information from the locating unit (40) connected to the data source (10) and to transmit said supplementary data to the data sink (20) together with the useful data (ND),
**characterized**
**in that** the data sink (20) is connected to a locating unit (50) and a checking device (60), and
**in that** the data sink (20) is designed to assign the received useful data (ND) further supplementary data (ZDₛ) that are derived from further information from the locating unit (50) connected to the data sink (20) and to supply the received useful data (ND) to the checking device (60) together with the supplementary data (ZD_{Q}) and further supplementary data (ZD_{S}).

4. System according to Claim 3, **characterized by** a device (60) that is provided for the purpose of relating the supplementary data (ZD_{Q}) assigned at the source end and the further supplementary data (ZD_{S}) assigned at the sink end to one another.

5. Method or system according to claim one of the preceding claims, **characterized in that** the supplementary information (ZD_{Q}, ZD_{S}) comprises a piece of time information from the two locating modules (40, 50) of the data source (10) and the data sink (20).

6. Method or system-according to one of the preceding claims, **characterized in that** the supplementary information (ZD_{Q}, ZD_{S}) comprises a piece of location information from the two locating modules (40, 50) of the data source (10) and the data sink (20).

7. Method or system according to Claim 5,
**characterized in that** the relationship consists in a time comparison for the two pieces of supplementary information and this is used to determine the delay for the useful information (ND) from the data source (10) to the data sink (20).

8. Method or system according to Claim 6 or 7,
**characterized in that** the relationship consists in a location comparison for the two pieces of supplementary information and this is used to determine the distance or the path of travel between data source (10) and data sink (20).

9. Method or system according to one of Claims 2 or 4 to 8, **characterized in that** the useful information (ND) is combined on a path from the data source (10) via at least one forwarding computation unit (31, 32, 33, 34) to the data sink (20), in every forwarding computation unit (31, 32, 33, 34), with supplementary information (ZD₃₁, ZD₃₂) produced in a locating unit (41, 42, 43, 44) associated with the respective forwarding computation unit (31, 32, 33, 34), and the relationship is used to reconstruct the local path of the useful information (ND) .

10. Method or system according to one of Claims 2 or 4 to 9, **characterized in that** the useful information (ND) is combined on a path from the data source (10) via at least one forwarding computation unit (31, 32, 33, 34) to the data sink (20), in every forwarding computation unit (31, 32, 33, 34), with supplementary information produced by a locating module in one of the respective forwarding computation units, and the relationship is used to reconstruct the temporal processing sequence of the useful information (ND).

11. Method or system according to one of the preceding claims, **characterized in that** the useful information or a portion of the useful information is introduced into the data source (10) by means of a removable memory, particularly a chip card, that can be evaluated by the data source (10).

12. Method or system according to Claim 11,
**characterized in that** the removable memory is provided for the purpose of storing the supplementary data (ZD_{Q}) sent by the data source (10) together with the useful data (ND) .

13. Method or system according to Claim 11 or 12, **characterized in that** the removable memory is in the form of, or is in the form of part of, a computer, particularly a personal computer, a mobile phone or a PDA or handheld computer.

14. Method or system according to one of the preceding claims, **characterized in that** the data source (10) and/or the data sink (20) is a mobile phone, a personal computer, a laptop computer, a PDA computer, a driver information system of a motor vehicle, an automated teller machine or the like.

15. Method or system according to one of the preceding claims, **characterized in that** the or one of the locating unit(s) (40) is a satellite receiver, particularly a GPS or GALILEO receiver, a mobile radio receiver, particularly a GSM, GPRS or UMTS mobile radio receiver, and/or comprises an inertial sensor system and/or a digital map and/or a map matching routine.

16. Method or system according to one of the preceding claims, **characterized in that** useful data and supplementary data are combined with one another using an encryption technique.

## Revendications

1. Procédé de transmission de données utiles (ND) d'une source de données (10) vers un collecteur de données (20),
la source de données (10) étant reliée à une unité de localisation (40), des données supplémentaires (ZD_{Q}) dérivées à partir d'informations de l'unité de localisation (40) reliée à la source de données (10) étant associées aux données utiles (ND) dans la source de données (10), lesquelles sont transmises au collecteur de données (20) conjointement avec les données utiles (ND),
**caractérisé en ce**
**que** dans le collecteur de données (20), d'autres données supplémentaires (ZD_{S}) sont associées aux données utiles (ND) reçues, lesquelles sont dérivées à partir d'autres informations d'une unité de localisation (50) reliée au collecteur de données (20), les données utilesw (ND) reçues conjointement avec les données supplémentaires (ZD_{Q}) et les autres données supplémentaires (ZD_{S}), étant acheminées à un dispositif de contrôle (60).

2. Procédé selon la revendication 1, **caractérisé en ce que** les données supplémentaires (ZD_{Q}) associées du côté de la source et les autres données supplémentaires (ZD_{S}) associées du côté du collecteur sont mises en relation les unes avec les autres.

3. Système de transmission de données utiles (ND) d'une source de données (10) vers un collecteur de données (20),
la source de données (10) étant reliée à une unité de localisation (40), la source de données (10) étant configurée pour associer aux données utiles (ND) des données supplémentaires (ZD_{Q}) dérivées à partir d'informations de l'unité de localisation (40) reliée à la source de données (10) et pour transmettre celles-ci au collecteur de données (20) conjointement avec les données utiles (ND),
**caractérisé en ce**
**que** le collecteur de données (20) est relié à une unité de localisation (50) et un dispositif de contrôle (60) et
en ce que le collecteur de données (20) est configuré pour associer d'autres données supplémentaires (ZD_{S}) aux données utiles (ND) reçues, lesquelles sont dérivées à partir d'autres informations de l'unité de localisation (50) reliée au collecteur de données (20) et pour acheminer les données utiles (ND) reçues, conjointement avec les données supplémentaires (ZD_{Q}) et les autres données supplémentaires (ZD_{S}), au dispositif de contrôle (60).

4. Système selon la revendication 3, **caractérisé par** un dispositif (60) qui est conçu pour mettre en relation les unes avec les autres les données supplémentaires (ZD_{Q}) associées du côté de la source et les autres données supplémentaires (ZD_{S}) associées du côté du collecteur.

5. Procédé ou système selon la revendication l'une des revendications précédentes, **caractérisé en ce que** les informations supplémentaires (ZD_{Q}, ZD_{S}) comprennent une information de temps des deux modules de localisation (40, 50) de la source de données (10) et du collecteur de données (20).

6. Procédé ou système selon l'une des revendications précédentes, **caractérisé en ce que** les informations supplémentaires (ZD_{Q}, ZD_{S}) comprennent une information d'emplacement des deux modules de localisation (40, 50) de la source de données (10) et du collecteur de données (20).

7. Procédé ou système selon la revendication 5,
**caractérisé en ce que** la relation se compose d'une comparaison du temps des deux informations supplémentaires et le temps de propagation des données utiles (ND) de la source de données (10) au collecteur de données (20) est déterminé avec celle-ci.

8. Procédé ou système selon la revendication 6 ou 7, **caractérisé en ce que** la relation se compose d'une comparaison de l'emplacement des deux informations supplémentaires et la distance ou le parcours entre la source de données (10) et le collecteur de données (20) est déterminée avec celle-ci.

9. Procédé ou système selon l'une des revendications 2 ou 4 à 8, **caractérisé en ce que** les informations utiles (ND), sur un trajet de la source de données (10) vers le collecteur de données (20) en passant par au moins une unité de calcul (31, 32, 33, 34) de transfert, sont combinées dans chaque unité de calcul (31, 32, 33, 34) de transfert avec une information supplémentaire (ZD₃₁, ZD₃₂) générée par une unité de localisation (41, 42, 43, 44) dans l'une des unités de calcul de transfert (31, 32, 33, 34) respectives, et le trajet local des informations utiles (ND) est reconstruit avec la relation.

10. Procédé ou système selon l'une des revendications 2 ou 4 à 9, **caractérisé en ce que** les informations utiles (ND) sont combinées sur un trajet de la source de données (10) vers le collecteur de données (20) en passant par au moins une unité de calcul (31, 32, 33, 34) de transfert, dans chaque unité de calcul (31, 32, 33, 34) de transfert avec une information supplémentaire générée par un module de localisation dans l'une des unités de calcul de transfert respectives, et la chronologie de traitement des informations utiles (ND) est reconstruite avec la relation.

11. Procédé ou système selon l'une des revendications précédentes, **caractérisé en ce que** les informations utiles ou une partie des informations utiles sont introduites dans la source de données (10) au moyen d'une mémoire remplaçable, notamment une carte à puce, qui peut être lue par la source de donnes (10).

12. Procédé ou système selon la revendication 11,
**caractérisé en ce que** la mémoire remplaçable est conçue pour mémoriser les données supplémentaires (ZD_{Q}) envoyées par la source de données (10) conjointement avec les données utiles (ND).

13. Procédé ou système selon la revendication 11 ou 12, **caractérisé en ce que** la mémoire remplaçable est réalisée sous la forme d'un élément constitutif d'un ordinateur, notamment un ordinateur personnel, un téléphone mobile ou un PDA ou encore un ordinateur portatif.

14. Procédé ou système selon l'une des revendications précédentes, **caractérisé en ce que** la source de données (10) et/ou le collecteur de données (20) est un téléphone mobile, un ordinateur personnel, un ordinateur portable, un PDA, un système d'information au conducteur d'un véhicule automobile, un guichet automatique bancaire ou similaire.

15. Procédé ou système selon l'une des revendications précédentes, **caractérisé en ce que** la ou l'une des unités de localisation (40) est un récepteur de satellite, notamment un récepteur GPS ou GALILEO, un récepteur de radiocommunication mobile, notamment un récepteur de radiocommunication mobile GSM, GPRS ou UMTS et/ou comprend un capteur inertiel et/ou une carte numérique et/ou une routine d'appariement de carte.

16. Procédé ou système selon l'une des revendications précédentes, **caractérisé en ce que** les données utiles et les données supplémentaires sont combinées entre elles en utilisant une technique de cryptage.
